# FASCICULE DE BREVET EUROPEEN

(11) **EP 0 704 358 B1**
(45) Date de publication et mention de la délivrance du brevet: **01.12.1999**
(21) Numéro de dépôt: 95114963.2
(22) Date de dépôt: 22.09.1995
(51) Int. Cl.: B60S 1/34

(54) **Essuie-glace de véhicule automobile du type à balayage non circulaire**
Kraftfahrzeug-Scheibenwischer mit nichtkreisförmigem Wischfeld
Motor vehicle windscreen wiper with non-circular wiping pattern

(30) Priorité: 29.09.1994 FR 9411663
(43) Date de publication de la demande: 03.04.1996
(73) Titulaire: VALEO SYSTEMES D'ESSUYAGE, 78321 La Verrière (FR)
(72) Inventeur: Eustache, Jean-Pierre, F-92160 Antony (FR)
(74) Mandataire: Gamonal, Didier

(56) Documents cités:
- EP-A- 0 180 142
- EP-A- 0 323 417
- DE-A- 3 840 823

## Description

La présente invention concerne un essuie-glace pour véhicule automobile.

L'invention concerne plus particulièrement un essuie-glace du type décrit et représenté dans les documents DE-A-3.840.823 et DE-A-645.789.

Ces documents décrivent un essuie-glace du type comportant un arbre d'entraînement monté à rotation par rapport à un élément fixe lié à la structure du véhicule et qui entraîne en rotation un boîtier d'entraînement sur lequel un bras d'essuie-glace est monté à rotation par l'intermédiaire d'un pivot dont l'axe est parallèle à l'axe de l'arbre d'entraînement, qui est lié en rotation au bras d'essuie-glace et qui est monté à rotation dans une douille de guidage formée dans un élément du corps de boîtier. Le boîtier d'entraînement contient un mécanisme de transmission comprenant un organe d'entrée lié en rotation à l'élément de structure, un organe de sortie mobile monté à rotation, autour de l'axe du pivot, par rapport au corps du boitier d'entraînement et lié en rotation au bras d'essuie-glace, et des moyens de transmission du mouvement entre les organes d'entrée et de sortie.

Ces conceptions d'un essuie-glace permettent d'obtenir un balayage non circulaire de la vitre à essuyer par le bras d'essuie-glace.

Dans le premier de ces documents, les organes d'entrée et de sortie sont des poulies crantées reliées entre elles par une courroie crantée et, dans le second document cité, les organes d'entrée et de sortie sont des pignons reliés entre eux par un pignon intermédiaire.

La conception d'un tel essuie-glace nécessite le montage en porte-à-faux du bras d'essuie-glace à l'extrémité du boîtier d'entraînement dans laquelle est agencé l'organe mobile de sortie du mécanisme de transmission.

Il est donc nécessaire d'assurer simultanément le montage à rotation d'un arbre de sortie qui est lié en rotation au bras d'essuie-glace et l'entraînement du bras d'essuie-glace par l'organe de sortie du mécanisme de transmission.

Dans les deux conceptions décrites et représentées dans les documents mentionnés précédemment, la poulie ou le pignon de sortie sont réalisés venus de matière avec l'arbre de sortie du mécanisme qui est guidé à rotation de part et d'autre du corps de la poulie, ou du pignon, qui fait saillie transversalement à travers une paroi du boîtier pour constituer, à l'une de ses extrémités, l'arbre de sortie du mécanisme.

L'assemblage des différents composants du mécanisme de transmission dans le boîtier de transmission puis le montage du bras d'essuie-glace à l'extrémité de l'arbre de sortie sont complexes et aboutissent à un encombrement de l'ensemble particulièrement important.

Ces conceptions, dans lesquelles le bras d'essuie-glace est situé globalement au-dessus du plan dans lequel s'étend le boîtier d'entraînement ne sont pas non plus satisfaisantes dans la mesure où elles affectent l'esthétique du véhicule en empêchant de réduire l'encombrement du dispositif d'essuie-glace, notamment lorsqu'il est en position de repos.

La présente invention a pour but de proposer une nouvelle conception d'un essuie-glace du type mentionné précédemment qui remédie aux inconvénients qui viennent d'être mentionnés.

Dans ce but, l'invention propose un essuie-glace, du type à balayage non circulaire (Essuie-glace du type décrit et représenté dans chacun des deux documents précités), caractérisé en ce que l'organe de sortie du mécanisme de transmission est traversé par la douille de guidage en étant reçu dans un logement formé dans une face de l'élément du corps de boîtier, et en ce qu'il est prévu un organe de retenue axiale du pivot par rapport à la douille de guidage.

Un tel essuie-glace diffère de l'essuie-glace proposé par la demande de brevet EP-A-0696 532 notamment en ce que l'essuie-glace selon l'invention comporte une douille de guidage formée dans un élément du corps de boîtier. Cette demande EP-A-0 696 532 entre dans l'état de la technique visé à l'article 54(3) et (4) CBE et ne doit pas être prise en compte pour l'appréciation de l'activité inventive aux termes de l'article 56 CBE

Selon des modes de réalisation de l'invention :
- l'élément du corps de boîtier comporte une partie en forme de plaque qui s'étend dans un plan sensiblement perpendiculaire à l'axe du pivot avec une paroi latérale de protection qui délimite ledit logement, et le pivot fait saillie axialement à travers la douille de palier au-dessus de la partie en forme de plaque pour coopérer avec des moyens de retenue axiale du pivot ;
- les moyens de retenue axiale comportent un anneau qui est reçu dans une gorge radiale de la partie en saillie du pivot et qui prend appui par l'une de ses faces contre une face d'appui formée en vis-à-vis sur la partie en forme de plaque de l'élément du corps de boîtier;
- une rondelle est interposée entre l'anneau et la face d'appui ;
- la rondelle est immobilisée en rotation par rapport à la partie en forme de plaque de l'élément du corps de boîtier ;
- une douille de palier est interposée entre l'alésage interne de la douille de guidage et le corps cylindrique du pivot ;
- le bras d'essuie-glace est relié au boîtier d'entraînement par une portion d'extrémité en forme de plaque qui s'étend en regard du logement ;
- l'organe mobile de sortie du mécanisme de transmission est fixé sur la portion en forme de plaque du bras d'essuie-glace au moyen de vis accessibles depuis la face de la portion en forme de plaque du bras d'essuie-glace ;
- le pivot est sollicité élastiquement par rapport à la douille de guidage de manière à amener une face annulaire de l'organe de sortie du mécanisme de transmission en butée contre une portion de surface annulaire formée en vis-à-vis dans la partie en forme de plaque de l'élément du corps de boîtier ;
- un patin annulaire de glissement est interposé entre la face annulaire de l'organe de sortie du mécanisme de transmission et la portion de surface annulaire formée en vis-à-vis dans la partie en forme de plaque de l'élément du corps de boîtier.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en section, passant par les axes de l'arbre d'entraînement et du pivot d'articulation, qui illustre les principaux composants d'un essuie-glace à balayage non circulaire, réalisé conformément aux enseignements de l'invention ;
- la figure 2 est une vue à plus grande échelle de la partie de droite de l'essuie-glace illustré sur la figure 1.

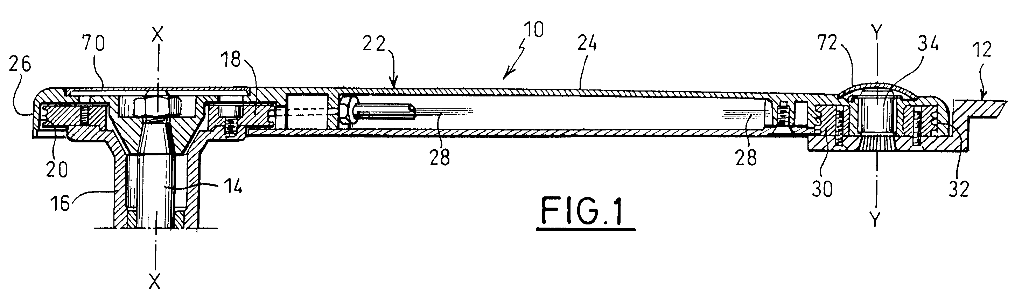

On a représenté sur la figure 1 les principaux composants d'un essuie-glace parmi lesquels un boîtier d'entraînement 10 relie un bras d'essuie-glace 12 à un arbre d'entraînement 14, également appelé arbre moteur, qui est animé d'un mouvement alternatif de rotation autour d'un axe X-X.

L'arbre d'entraînement 14 est monté à rotation dans un fourreau 16 qui est fixe par rapport à la structure du véhicule et qui porte à son extrémité supérieure une poulie fixe à gorges 18 qui est agencée dans un logement 20 formé dans l'élément principal 22 du corps du boîtier d'entraînement 10.

L'élément 22 est une pièce de forme générale allongée, de la gauche vers la droite en considérant la figure 1, qui est constituée pour l'essentiel par une paroi supérieure en forme de plaque 24 qui s'étend dans un plan perpendiculaire à l'axe X-X et par une paroi latérale 26 qui délimite en partie le logement 20.

La poulie fixe 18 est reliée par deux câbles "Bowden" 28 à une poulie mobile 30 qui est montée à rotation dans un logement 32 formé à l'extrémité longitudinale de droite du boîtier d'entraînement 10, autour d'un axe de rotation Y-Y qui est parallèle à l'axe X-X de l'arbre d'entraînement 14.

La poulie 30 est liée en rotation au bras d'essuie-glace 12 qui est lui-même monté à rotation dans l'élément 22 du corps du boîtier d'entraînement 10 par l'intermédiaire d'un pivot 34.

Le principe de fonctionnement d'un tel essuie-glace est décrit dans le document DE-A-3.840.823.

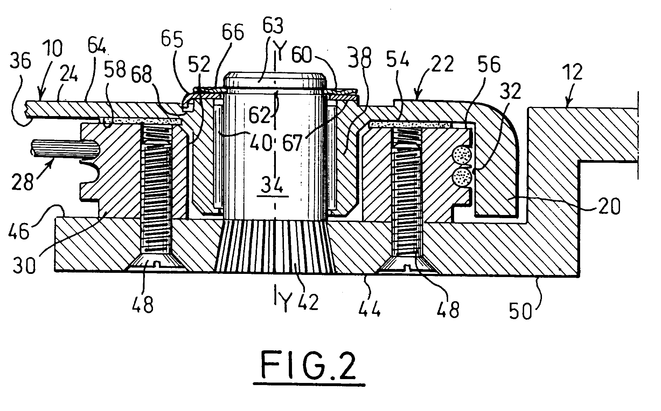

Comme cela est illustré plus en détail aux figures 2 et 3, la partie supérieure en forme de plaque 24 de l'élément 22 du corps du boîtier d'entraînement 10 comporte, sur sa face inférieure 36, une douille 38, réalisée venue de matière avec la plaque 24, pour le guidage en rotation, autour de l'axe Y-Y, du pivot 34, par exemple avec interposition d'une douille de palier à aiguilles 40.

Le pivot 34 est constitué par un corps cylindrique principal monté à rotation dans la douille 38 et par une extrémité de liaison conique et crantée 42 qui est liée en rotation à une portion d'extrémité en forme de plaque 44 du bras d'essuie-glace 12 qui s'étend dans un plan perpendiculaire à l'axe Y-Y, parallèlement au plan de la portion en forme de plaque 24, en-dessous du logement 32 qu'il obture partiellement.

La poulie 30 est fixée sur la face supérieure 46 de la portion en forme de plaque 44 par l'intermédiaire de vis de fixation 48 dont les têtes sont accessibles, pour la fixation ou le démontage du bras d'essuie-glace 12, depuis la face inférieure 50 de la portion en forme de plaque 44 de celui-ci.

La poulie 30 est une pièce de forme annulaire qui comporte un trou central 52 qui est traversé avec un jeu radial par le corps de la douille de guidage 38.

Un patin annulaire de glissement 54 est interposé entre la face supérieure annulaire 56 de la poulie 30 et une portion de surface annulaire en vis-à-vis 58 de la face inférieure 36 de la partie en forme de plaque 24 de l'élément 22.

La retenue axiale de l'ensemble constitué par le bras d'essuie-glace 12 et la poulie 30 par rapport au boîtier d'entraînement 10 est assurée par l'intermédiaire d'un anneau élastique ondulé 60 qui est reçu dans une gorge 62 agencée dans la partie d'extrémité axiale 63 du pivot 34 qui fait saillie axialement au-dessus de la face supérieure 64 de la partie en forme de plaque 24 de l'élément 22.

Du fait de son élasticité, l'anneau 60 sollicite en permanence le pivot 34, axialement de bas en haut en considérant la figure 2, par rapport à l'élément 22 du corps de boîtier d'entraînement 10.

Une rondelle de frottement 66 est interposée entre l'anneau 60 et la portion de surface annulaire 67 formée en vis-à-vis dans la face supérieure 64 de l'élément 22.

La rondelle de frottement 66 est immobilisée en rotation par rapport à l'élément 22 au moyen d'un bec axial 65 qui est reçu dans un creux 68 formé dans la face supérieure 64.

Grâce à la conception selon l'invention, il est possible d'agencer les principaux composants du mécanisme de transmission contenus dans le boîtier d'entraînement 10, et notamment les câbles 28 avec la poulie mobile 30 puis de venir mettre en place le bras d'essuie-glace 12 en introduisant verticalement, de bas en haut en considérant la figure 2, le pivot 34 dans la douille de guidage 38 puis en assurant l'immobilisation axiale de l'ensemble par l'intermédiaire de la rondelle 66 et de l'anneau 60.

Il ne reste plus alors qu'à lier en rotation la poulie 30 à la partie inférieure 44 du bras d'essuie-glace 12 par l'intermédiaire des vis 48.

Comme on peut le voir sur la figure 2, le bras d'essuie-glace 12 peut s'étendre longitudinalement dans le même plan que le boîtier d'entraînement 10 et la face supérieure 64 de la partie en forme de plaque 24 de l'élément 22 du corps du boîtier d'entraînement 10 est pratiquement lisse à l'exception des deux capuchons 70 et 72 illustrés sur la figure 1.

On notera également que l'agencement selon l'invention permet de séparer les fonctions de guidage en rotation du bras d'essuie-glace 12 par l'intermédiaire du pivot 34 sur le corps du boîtier d'entraînement 10 et les fonctions d'entraînement en rotation du bras d'essuie-glace 12 par l'intermédiaire de la poulie 30 fixée sur la partie 44 de celui-ci.

Les efforts appliqués à la poulie 30 par les câbles 28 ne sollicitent donc pas directement des composants du boîtier d'entraînement 10 mais sont transmis à la douille de guidage 38 par l'intermédiaire du pivot 34, celui-ci étant guidé verticalement sur une grande longueur de portée grâce à l'agencement de la douille de guidage 38.

## Revendications

1. Essuie-glace pour véhicule automobile du type comportant un arbre d'entraînement (14) monté à rotation par rapport à un élément fixe (16) lié à la structure du véhicule et qui entraîne en rotation un boîtier d'entraînement (10) sur lequel un bras d'essuie-glace (12) est monté à rotation par l'intermédiaire d'un pivot (34) dont l'axe (Y-Y) est parallèle à l'axe (X-X) de l'arbre d'entraînement (14), qui est lié en rotation au bras d'essuie-glace (12, 44) et qui est monté à rotation dans une douille de guidage (38) formée dans un élément (22, 24) du corps de boîtier (10), le boîtier d'entraînement (10) contenant un mécanisme de transmission comprenant un organe d'entrée (18) lié en rotation à l'élément de structure (16), un organe de sortie mobile (30) monté à rotation, autour de l'axe (Y-Y) du pivot (34), par rapport au corps (22) du boîtier d'entraînement (10) et lié en rotation au bras d'essuie-glace (12, 44), et des moyens (28) de transmission du mouvement entre les organes d'entrée (18) et de sortie (30), de manière à obtenir un balayage non circulaire de la vitre à essuyer par le bras d'essuie-glace (12), caractérisé en ce que l'organe de sortie (30) du mécanisme de transmission est traversé par la douille de guidage (38) en étant reçu dans un logement (32) formé dans une face (36) de l'élément (22) du corps de boîtier, et en ce qu'il est prévu un organe (60) de retenue axiale du pivot (34) par rapport à la douille de guidage (38).

2. Essuie-glace selon la revendication 1, caractérisé en ce que l'élément (22) du corps de boîtier (10) comporte une partie en forme de plaque (24) qui s'étend dans un plan sensiblement perpendiculaire à l'axe (Y-Y) du pivot (34) avec une paroi latérale (20) de protection qui délimite ledit logement (32), et en ce que le pivot (34) fait saillie axialement (62) à travers la douille de guidage (38) au-dessus de la partie en forme de plaque (24) pour coopérer avec des moyens de retenue axiale (60) du pivot (34).

3. Essuie-glace selon la revendication 2, caractérisé en ce que les moyens de retenue axiale comportent un anneau (60) qui est reçu dans une gorge radiale (62) de la partie en saillie (63) du pivot (34) et qui prend appui par l'une de ses faces contre une face d'appui (67) formée en vis-à-vis sur la partie en forme de plaque (24) de l'élément (22) du corps de boîtier (10).

4. Essuie-glace selon la revendication 3, caractérisé en ce qu'une rondelle (66) est interposée entre l'anneau (60) et la face d'appui (67).

5. Essuie-glace selon la revendication 4, caractérisé en ce que la rondelle est immobilisée en rotation par rapport à la partie en forme de plaque (24) de l'élément (22) du corps de boîtier (10).

6. Essuie-glace selon l'une quelconque des revendications précédentes, caractérisé en ce qu'une douille de palier (40) est interposée entre l'alésage interne de la douille de guidage (38) et le corps cylindrique du pivot (34).

7. Essuie-glace selon l'une quelconque des revendications précédentes, caractérisé en ce que le bras d'essuie-glace (12) est relié au boîtier d'entraînement (10) par une portion d'extrémité en forme de plaque (44) qui s'étend en regard du logement (32).

8. Essuie-glace selon la revendication 7, caractérisé en ce que l'organe mobile de sortie (30) du mécanisme de transmission est fixé sur la portion en forme de plaque (44) du bras d'essuie-glace (12) au moyen de vis (48) accessibles depuis la face (50) de la portion en forme de plaque (44) du bras d'essuie-glace (12).

9. Essuie-glace selon la revendication 2, caractérisé en ce que le pivot (34) est sollicité élastiquement par rapport à la douille de guidage (38) de manière à amener une face annulaire (56) de l'organe de sortie (30) du mécanisme de transmission en butée contre une portion de surface annulaire (58) formée en vis-à-vis dans la partie en forme de plaque (24) de l'élément (22) du corps de boîtier (10).

10. Essuie-glace selon la revendication 9, caractérisé en ce qu'un patin annulaire de glissement (54) est interposé entre la face annulaire (56) de l'organe de sortie (30) du mécanisme de transmission et la portion de surface annulaire (58) formée en vis-à-vis dans la partie en forme de plaque (24) de l'élément (22) du corps de boîtier (10).

## Claims

1. A screen wiper for a motor vehicle, of the type comprising a drive spindle (14) which is mounted for rotation with respect to a fixed element (16) connected to the structure of the vehicle, and which drives in rotation a drive housing (10) on which a screen wiper arm (12) is mounted for rotation by means of a pivot (34), the axis (Y-Y) of which is parallel to the axis (X-X) of the drive shaft (14), which is coupled in rotation to the screen wiper arm (12, 44) and which is mounted for rotation in a guide bush (38) formed in an element (22, 24) of the housing body (10), the drive housing (10) containing a transmission mechanism comprising an input member (18) coupled in rotation to the structural element (16), a movable output member (30) mounted for rotation about the axis (Y-Y) of the pivot (34) with respect to the body (22) of the drive housing (10) and coupled for rotation with the screen wiper arm (12, 44), and means (28) for transmitting motion between the input member (18) and the output member (30), in such a way as to obtain non-circular movement for wiping the glass to be swept by the screen wiper arm (12), characterised in that the guide sleeve (38) extends through the output member (30) of the transmission mechanism, which is received within a recess (32) formed in a face (36) of the element (22) of the housing body, and in that a member (60) is provided for axial retention of the pivot (34) with respect to the guide sleeve (38).

2. A screen wiper according to Claim 1, characterised in that the element (22) of the housing body (10) includes a portion in the form of a plate (24) which lies in a plane substantially at right angles to the axis (Y-Y) of the pivot (34), with a protective side wall (20) which bounds the said recess (32), and in that the pivot (34) projects axially (63) through the guide sleeve (38), outside the plate-shaped portion (24), so as to cooperate with axial retaining means (60) for the pivot (34).

3. A screen wiper according to Claim 2, characterised in that the axial retaining means comprise a ring (60), which is received in a radial groove (62) in the projecting portion (63) of the pivot (34), and which bears through one of its faces against a thrust face (67) formed, in facing relationship with it, on the plate-shaped portion (24) of the element (22) of the housing body (10).

4. A screen wiper according to Claim 3, characterised in that a washer (66) is interposed between the ring (60) and the thrust face (67).

5. A screen wiper according to Claim 4, characterised in that the washer is held against rotation with respect to the plate-shaped portion (24) of the element (22) of the housing body (10).

6. A screen wiper according to any one of the preceding Claims, characterised in that a support bearing (40) is interposed between the internal bore of the guide sleeve (38) and the cylindrical body of the pivot (34).

7. A screen wiper according to any one of the preceding Claims, characterised in that the screen wiper arm (12) is connected to the drive housing (10) through a plate-shaped end portion (44) which lies facing the recess (32).

8. A screen wiper according to Claim 7, characterised in that the movable output member (30) of the transmission mechanism is fixed on the plate-shaped portion (44) of the screen wiper arm (12) by means of screws (48) which are accessible from the front (50) of the plate-shaped portion (44) of the screen wiper arm (12).

9. A screen wiper according to Claim 2, characterised in that the pivot (34) is biased elastically with respect to the guide sleeve (38), in such a way as to put an annular face (56) of the output member (30) of the transmission mechanism into abutment against an annular surface portion (58) which is formed, in facing relationship with it, in the plate-shaped portion (24) of the element (22) of the housing body (10).

10. A screen wiper according to Claim 9, characterised in that an annular slide pad (54) is interposed between the annular face (56) of the output member (30) of the transmission mechanism and the annular surface portion (58) which is formed in facing relationship with it in the plate-shaped portion (24) of the element (22) of the housing body (10).

## Patentansprüche

1. Scheibenwischer für Kraftfahrzeuge, umfassend eine Antriebswelle (14), die drehbar im Verhältnis zu einem mit der Fahrzeugstruktur verbundenen ortsfesten Element (16) gelagert ist und die ein Antriebsgehäuse (10) drehend antreibt, an dem ein Scheibenwischerarm (12) drehbar mittels eines Zapfens (34) gelagert ist, dessen Achse (Y-Y) parallel zur Achse (X-X) der Antriebswelle (14) verläuft, die drehbar mit dem Scheibenwischerarm (12, 44) verbunden und drehbar in einer Führungshülse (38) gelagert ist, die in einem Element (22, 24) des Gehäusekörpers (10) ausgebildet ist, wobei das Antriebsgehäuse (10) einen Übertragungsmechanismus enthält, der ein drehbar mit dem Strukturelement (16) verbundenes Eingangsorgan (18), ein um die Achse (Y-Y) des Zapfens (34) drehbar im Verhältnis zum Körper (22) des Antriebsgehäuses (10) gelagertes und drehbar mit dem Scheibenwischerarm (12, 44) verbundenes bewegliches Ausgangsorgan (30) und Mittel (28) zur Übertragung der Bewegung zwischen den Eingangs- (18) und Ausgangsorganen (30) umfaßt, um ein nichtkreisförmiges Wischfeld durch den Scheibenwischerarm (12) auf der zu wischenden Scheibe herbeizuführen, **dadurch gekennzeichnet,** daß durch das Ausgangsorgan (30) des Übertragungsmechanismus die Führungshülse (38) hindurchgeht, wobei es in eine in einer Fläche (36) des Elements (22) des Gehäusekörpers ausgebildete Aufnahme (32) eingesetzt ist, und daß ein Organ (60) zum axialen Halten des Zapfens (34) im Verhältnis zur Führungshülse (38) vorgesehen ist.

2. Scheibenwischer nach Anspruch 1, **dadurch gekennzeichnet,** daß das Element (22) des Gehäusekörpers (10) einen plattenförmigen Teil (24) umfaßt, der sich in einer Ebene in etwa senkrecht zur Achse (Y-Y) des Zapfens (34) mit einer seitlichen Schutzwand (20) erstreckt, die die besagte Aufnahme (32) begrenzt, und daß der Zapfen (34) durch die Führungshülse (38) oberhalb des plattenförmigen Teils (24) axial vorsteht (62), um mit Mitteln (60) zum axialen Halten des Zapfens (34) zusammenzuwirken.

3. Scheibenwischer nach Anspruch 2, **dadurch gekennzeichnet,** daß die axialen Haltemittel einen Ring (60) umfassen, der in eine radiale Auskehlung (62) des vorstehenden Teils (63) des Zapfens (34) eingesetzt ist und der durch eine seiner Flächen an einer Auflagefläche (67) zur Auflage kommt, die gegenüberliegend auf dem plattenförmigen Teil (24) des Elements (22) des Gehäusekörpers (10) ausgebildet ist.

4. Scheibenwischer nach Anspruch 3, **dadurch gekennzeichnet,** daß zwischen dem Ring (60) und der Auflagefläche (67) eine Scheibe (66) eingefügt ist.

5. Scheibenwischer nach Anspruch 4, **dadurch gekennzeichnet,** daß die Scheibe gegen Verdrehung im Verhältnis zu dem plattenförmigen Teil (24) des Elements (22) des Gehäusekörpers (10) gesichert ist.

6. Scheibenwischer nach einem der vorangehenden Ansprüche, **dadurch gekennzeichnet,** daß eine Lagerhülse (40) zwischen der Innenbohrung der Führungshülse (38) und dem Zylindrischen Körper des Zapfens (34) eingefügt ist.

7. Scheibenwischer nach einem der vorangehenden Ansprüche, **dadurch gekennzeichnet,** daß der Scheibenwischerarm (12) mit dem Antriebsgehäuse (10) durch einen plattenförmigen Endabschnitt (44) verbunden ist, der sich gegenüber der Aufnahme (32) erstreckt.

8. Scheibenwischer nach Anspruch 7, **dadurch gekennzeichnet,** daß das bewegliche Ausgangsorgan (30) des Übertragungsmechanismus auf dem plattenförmigen Abschnitt (44) des Scheibenwischerarms (12) anhand von Schrauben (48) befestigt ist, die von der Fläche (50) des plattenförmigen Abschnitts (44) des Scheibenwischerarms (12) aus zugänglich sind.

9. Scheibenwischer nach Anspruch 2, **dadurch gekennzeichnet,** daß der Zapfen (34) im Verhältnis zur Führungshülse (38) elastisch beaufschlagt wird, um eine ringförmige Fläche (56) des Ausgangsorgans (30) des Übertragungsmechanismus zum Anschlag an einer ringförmigen Teilfläche (58) zu bringen, die gegenüber in dem plattenförmigen Teil (24) des Elements (22) des Gehäusekörpers (10) ausgebildet ist.

10. Scheibenwischer nach Anspruch 9, **dadurch gekennzeichnet,** daß ein ringförmiges Gleitsegment (54) zwischen der ringförmigen Fläche (56) des Ausgangsorgans (30) des Übertragungsmechanismus und der gegenüber in dem plattenförmigen Teil (24) des Elements (22) des Gehäusekörpers (10) ausgebildeten ringförmigen Teilfläche (58) eingefügt ist.
